# EUROPÄISCHE PATENTANMELDUNG

(11) **EP 0 560 041 A2**
(43) Veröffentlichungstag der Anmeldung: **15.09.1993**
(21) Anmeldenummer: 93101542.4
(22) Anmeldetag: 02.02.1993
(51) Int. Cl.: H04Q 11/04

(54) **Verfahren zum Umschalten einer Telekommunikations-Anschlussleitung beim Übergang vom Notbetrieb in den Normalbetrieb**

(30) Priorität: 10.03.1992 DE 4207563
(71) Anmelder: ROBERT BOSCH GMBH, 70442 Stuttgart (DE)
(72) Erfinder: Trick, Ulrich, Dr., W-6232 Bad Soden 2 (DE); Rätz, Bernd, W-6000 Frankfurt/Main 50 (DE); Reitz, Matthias, W-6090 Rüsselsheim 5 (DE); Troyke, Volker, W-6369 Schöneck 1 (DE); Stricker, Thomas, W-6259 Oberbrechen (DE)

(57) **Zusammenfassung**

Bei einer digitalen Telekommunikations-Einrichtung soll eine im Notbetrieb bestehende Verbindung nicht unterbrochen werden, wenn eine Zurückschaltung in den Normalbetrieb erfolgen kann, weil beispielsweise die Stromversorgungs-Einrichtung wieder zur Verfügung steht. Es soll dabei nicht gewartet werden müssen, bis die im Notbetrieb bestehende Verbindung beendet wird. Das Verfahren soll unabhängig von Art und Größe einer digitalen Telekommunikations-Einrichtung eingesetzt werden können.

Es ist eine Notbetriebs-Steuereinrichtung vorgesehen, die den Ausfall und die Wiederkehr der Stromversorgung erkennt, bei Wiederkehr der Stromversorgung wird innerhalb der Telekommunikations-Einrichtung eine entsprechende Ersatzverbindung geschaltet. Erst wenn diese Ersatzverbindung hergestellt worden ist, wird die Direktverbindung getrennt. Danach werden die an der Ersatzverbindung beteiligten Schnittstellen in einen Verbindungszustand versetzt, wie er im Normalbetrieb herrscht.

Die gleiche Verfahrensweise kann bei allen Arten von digitalen Kommunikations-Vermittlungsanlagen und anderen Telekommunikations-Einrichtungen unabhängig von deren Größen wirtschaftlich angewendet werden. Dabei werden genormte Befehlsstrukturen beim Austausch der Signalisierungsinformation verwendet.

## Beschreibung

Die Erfindung betrifft ein Verfahren zur Umschaltung einer Telekommunikations-Anschlußleitung beim Übergang vom Notbetrieb in den Normalbetrieb nach dem Oberbegriff des Patentanspruchs 1.

Aus der DE-PS 841 157 ist eine Fernsprech-Nebenstellenanlage bekannt, die bei Ausfall des Wechselstromnetzes eine vorbestimmte Nebenstelle mit der Amtsleitung unmittelbar verbindet. Mit der Schaltungsanordnung, welche einer Amtsleitung und der damit zu verbindenden Nebenstelle zugeordnet ist, wird erreicht, daß eine bei Netzausfall bestehende Verbindung nicht unterbrochen wird, wenn die Netzspannung wiederkehrt. Eine derartige Schaltungsanordnung beansprucht relativ viel Platz und ist sehr aufwendig. Bei größeren Vermittlungsanlagen mit mehr als einer Amtsleitung ist deshalb eine derartige Schaltungsanordnung nicht wirtschaftlich einzusetzen. Außerdem ist es nicht möglich, auch digitale Anschlußleitungen mit digitalen Endgeräten in einer Weise zusammen zu schalten, wie dies in der vorgenannten Patentschrift angegeben ist.

Ein Netzabschlußgerät für den ISDN-Basisanschluß ist aus der DE-PS 40 38 749 bekannt. Dieses Netzabschlußgerät hat für jede Schnittstelle eine dezentrale Steuereinrichtung und enthält eine Koppelfeldsteuerung sowie eine Koppeleinrichtung, worüber Nutz-und Signalisierungskanäle so miteinander verbunden werden können, daß Internverbindungen zwischen den Endgeräteschnittstellen herstellbar sind. Bei Ausfall der örtlichen Stromversorgung wird dies von einer gemeinsamen Steuereinrichtung erkannt und dann innerhalb oder außerhalb der Koppeleinrichtung eine Direktverbindung zwischen einer Endgeräteschnittstelle und der Anschlußleitung geschaltet. Über diese Standverbindung ist in diesem Notbetriebsfall nur ein vorbestimmtes Endgerät betriebsbereit, welches über die Anschlußleitung mit Strom versorgt wird. Wenn keine besonderen Maßnahmen getroffen werden, gehen derartige digitale Direktverbindungen bei der Wiederkehr der Stromversorgung verloren. Eine Schaltungsanordnung, wie sie in der DE-PS 841 157 für analog betriebene Anschlußleitungen beschrieben wird, kann bei digitaler Durchschaltung nicht angewendet werden.

Die Aufgabe der vorliegenden Erfindung besteht darin, ein Verfahren zur Umschaltung einer digitalen Kommunikations-Anschlußleitung beim Übergang vom Notbetrieb in Normalbetrieb vorzustellen, womit bei einer digitalen Telekommunikations-Einrichtung eine im Notbetrieb bestehende Verbindung beim Übergang in den Normalbetrieb nicht unterbrochen wird. Der Verbindungszustand soll so hergestellt werden, wie er beim Normalbetrieb ist. Es sollen außerdem die Voraussetzungen dafür geschaffen werden, daß kurzfristig freie Kanäle den nicht belegten Endgeräten zur Verfügung gestellt werden können.

Diese Aufgabe wird mit einer Merkmalskombination gelöst, wie sie im Patentanspruch 1 angegeben ist. Damit wird in vorteilhafter Weise erreicht, daß eine im Notbetriebszustand bestehende Verbindung ohne Unterbrechung in einen Zustand versetzt wird, wie er im Normalbetrieb herrscht.

Ein Ausführungsbeispiel der Erfindung wird nachfolgend anhand einer Zeichnung näher erläutert.

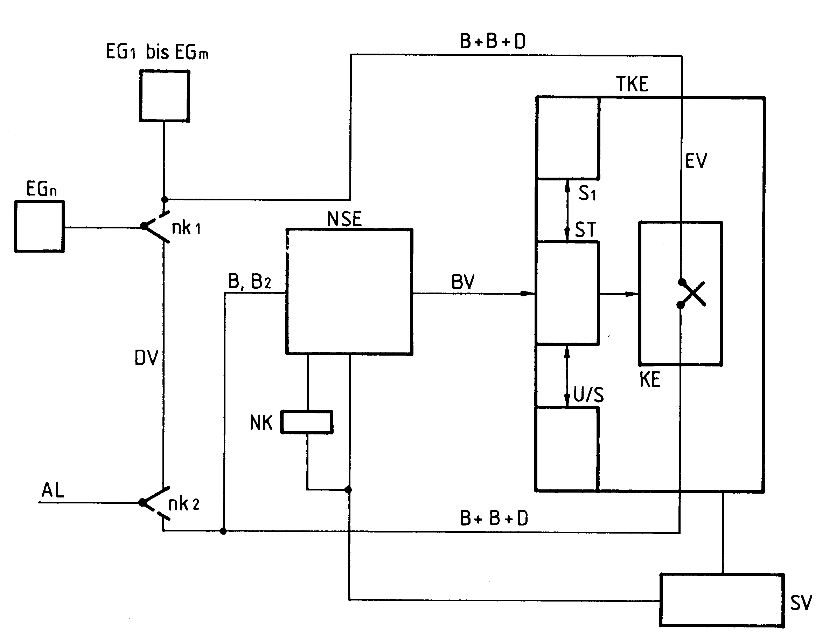

In der Zeichnung ist eine Telekommunikations-Einrichtung TKE dargestellt, welche über eine Koppeleinrichtung KE Endgeräte EG untereinander und mit Anschlußleitungen AL verbinden kann. Die Endgeräte EG und auch die Telekommunikations-Einrichtung TKE arbeiten nach einem digitalen Übertragungs- und Durchschalteverfahren. Verbindungen können jedoch von der Telekommunikations-Einrichtung TKE nur dann hergestellt werden, wenn von der Stromversorgungs-Einrichtung SV die erforderliche Leistung bereitgestellt wird. Wenn die Stromversorgung ausgefallen ist, so kann diese Funktion von der Telekommunikations-Einrichtung TKE nicht ausgeführt werden.

Um dennoch einen Notbetrieb zu ermöglichen, ist es bekannt, eine Anschlußleitung AL direkt mit einem Endgerät EG zu verbinden. Hierzu kann ein Ruhestromrelais NK (Netzkontrolle) dienen, welches beim Ausfall der Stromversorgung SV seine Ruhelage einnimmt, so daß die Kontakte nk1 und nk2 in die gezeichnete Schaltstellung geraten. Es ergibt sich dann eine Direktverbindung DV zwischen dem betreffenden Endgerät EG und der Anschlußleitung AL. Wenn die Stromversorgungseinrichtung SV ordnungsgemäß in Betrieb ist, so ist das Ruhestromrelais NK in seiner Arbeitsstellung, so daß das Endgerät EGn und auch die Anschlußleitung AL mit der Telekommunikations-Einrichtung TKE verbunden sind. Diese Schaltstellung ist in der Zeichnung gestrichelt dargestellt.

Wenn im Notbetriebszustand über die Direktverbindung DV ein Gespräch geführt wird oder ein Datenaustausch stattfindet, so würde eine derartige Verbindung unterbrochen werden, wenn die Stromversorgungseinrichtung SV wieder funktionsfähig ist. Um dies zu verhindern, ist eine Notbetriebs-Steuereinrichtung NSE vorgesehen, welche feststellen kann, ob die Stromversorgungseinrichtung SV funktionsfähig ist oder nicht. Beim Übergang vom Normalbetrieb in den Notbetriebszustand findet eine sofortige Umschaltung statt, so daß wie bereits beschrieben worden ist eine Direktverbindung DV entsteht.

Wenn aber beim Bestehen des Notbetriebszustands die Stromversorgungseinrichtung SV wieder zur Verfügung steht, so wird von der Notbetriebs-Steuereinrichtung NSE eine sofortige Rückschaltung auf den Normalbetrieb zunächst verhindert. Die Notbetriebs-Steuereinrichtung NSE bildet dann einen Befehl BV.

Mit diesem Befehl BV wird der Steuereinrichtung ST der Telekommunikations-Einrichtung TKE mitgeteilt, daß eine Ersatzverbindung EV für die Direktverbindung DV aufgebaut werden soll. Der Stromkreis für das Ruhestromrelais NK wird also erst dann geschlossen, wenn die von der Steuereinrichtung ST der Telekommunikations-Einrichtung TKE hergestellte Ersatzverbindung EV besteht. Die an der Direktverbindung DV beteiligten Kontakte nk1 und nk2 nehmen dann die gestrichelte Schaltstellung ein.

Selbstverständlich können anstelle von Relaiskontakten nk1 und nk2 auch elektronische Schaltmittel eingesetzt werden. Es ist jedoch darauf zu achten, daß deren Eigenstrombedarf nicht zu hoch wird, weil die von der Anschlußleitung AL zur Verfügung gestellte Stromversorgung nicht beliebig leistungsstark ist.

Innerhalb der Notbetriebssteuereinrichtung NSE kann noch eine zusätzliche Zeitverzögerung vorgesehen sein, so daß die Direktverbindung DV erst nach deren Ablauf aufgehoben wird. Es wird damit sichergestellt, daß alle an der Ersatzverbindung EV beteiligten Steuer- und Takteinrichtungen ihren normalen Betriebszustand erreicht haben. Wenn die Ersatzverbindung EV durchgeschaltet ist und die Direktverbindung DV nicht mehr besteht, so können weiterhin Daten über die Nutzdatenkanäle B1/B2 ausgetauscht werden. Die beteiligten Schnittstellen U/S (für die Anschlußleitung AL) und S1 (für das vorher per Direktverbindung DV angeschaltete Endgerät EG) müssen nun hinsichtlich der Signalisierungs-Situation über den Signalisierungskanal D in einen Zustand gebracht werden, wie er bei einer bestehenden Digitalverbindung im Normalbetrieb herrscht.

Zu diesem Zweck wendet sich die Steuerung ST der Telekommunikationseinrichtung TKE zunächst an die Schnittstelle S1 der Endgeräte EG und fragt dort die Adressen von den angeschalteten Endgeräten EG ab. Darunter befindet sich auch die Adresse des notspeiseberechtigten Endgerätes EGn. Daraufhin erzeugt die Steuereinrichtung ST Befehle für den Abbau von Verbindungen und sendet diese zusammen mit den Adressen der Endgeräte EG zur Schnittstelle U/S der Anschlußleitung AL. Diese Befehle gelangen dann zur Vermittlungsstelle, wo sie ausgewertet werden. Bei Abbaubefehlen zu Verbindungen, die garnicht bestanden haben, werden diese ignoriert. Dagegen erfolgt eine Rückmeldung für die im Notbetrieb vorhanden gewesene Direktverbindung DV, und es wird dabei festgestellt, daß eine derartige Verbindung als Ersatzverbindung EV noch besteht und nicht ausgelöst werden darf.

Diese Rückmeldung in Form eines Befehls für den Aufbau von Verbindungen gelangt in die Schnittstelle U/S für die Anschlußleitung AL und in die Steuereinrichtung ST der Telekommunikations-Einrichtung TKE. Von dort wird dieser Befehl für den Aufbau einer Verbindung auch an die Schnittstelle S1 weitergegeben. Damit gelangen beide Schnittstellen U/S und S1 in einen Zustand, wie er bei einer bestehenden Verbindung im Normalbetrieb herrscht. Zur Übertragung dieser Abbau- und Aufbaubefehle wird auf der Anschlußleitung AL der Signalisierungskanal D benutzt. Es werden dabei Signalisierungsstrukturen benutzt, wie sie im Dienste integrierenden Digitalnetz ISDN innerhalb des genormten Schichtenmodells verwendet werden.

Wenn die Rückschaltung in den Normalbetrieb nach der vorbeschriebenen Art vollzogen ist, so können freie Nutzdatenkanäle anderen Endgeräten Er bis Em zur Verfügung gestellt werden. Da die Notbetriebs-Steuereinrichtung NSE feststellt, auf welchem der Nutzdatenkanäle B1 oder B2 während des Notbetriebszustandes ein Datenaustausch stattgefunden hatte, und auch nach der Rückschaltung über die Ersatzverbindung EV noch stattfindet, kann diese Information an die Steuereinrichtung ST der Telekommunikations-Einrichtung TKE geliefert werden. Daraus kann die Telekommunikations-Einrichtung TKE erkennen, welche Nutzdatenkanäle B1 oder B2 noch frei sind. Beim Übergang vom Notbetriebszustand in den Normalbetrieb muß also nicht gewartet werden, bis eine im Notbetriebszustand bestehende Verbindung ausgelöst wird.

Da eine Ersatzverbindung EV über in einer Koppeleinrichtung KE vorhandene Wege geschaltet wird, ist das beschriebene Verfahren bei allen Arten von Telekommunikations-Einrichtungen TKE anwendbar. Der Befehl für das Herstellen einer Ersatzverbindung kann einem im Normalbetrieb üblichen Befehl entsprechen, so daß keine besonderen Steuerungsprozeduren in einer Steuereinrichtung ST der Telekommunikations-Einrichtung TKE eröffnet werden müssen.

## Patentansprüche

1. Verfahren zur Umschaltung einer Telekommunikations-Anschlußleitung beim Übergang vom Notbetrieb in den Normalbetrieb, wobei im Notbetrieb eine Direktverbindung zwischen einer Anschlußleitung und einem Endgerät durchgeschaltet wird, wenn bei einer Telekommunikations-Einrichtung die Stromversorgung ausgefallen ist, und diese Direktverbindung wieder aufgehoben wird, wenn die Stromversorgung wieder zur Verfügung steht, wobei eine während des Notbetriebs bestehende Verbindung durch diese Zurückschaltung in den Normalbetrieb nicht unterbrochen wird, indem bei der Wiederkehr der Stromversorgung eine Ersatzverbindung geschaltet wird,
dadurch gekennzeichnet,
daß bei einer digital betriebenen Telekommunikations-Einrichtung (TKE) eine Notbetriebs-Steuereinrichtung (NSE) vorgesehen ist, die den Ausfall und die Wiederkehr der Stromversorgung (SV) erkennt,
daß bei der Wiederkehr der Stromversorgung (SV) von der Notbetriebs-Steuereinrichtung (NSE) ein Befehl (BV) an die Steuereinrichtung (ST) der Telekommunikations-Einrichtung (TKE) gegeben wird, wodurch über eine in der Telekommunikations-Einrichtung (TKE) befindliche Koppeleinrichtung (KE) eine der Direktverbindung (DV) entsprechende Ersatzverbindung (EV) zwischen der digitalen Anschlußleitung (AL) und einer Schnittstelle (S1) zu einem Endgerät (EGn) hergestellt wird, bei der zunächst alle Nutzdatenkanäle (B1 + B2) und mindestens der Signalisierungskanal (D) durchgeschaltet werden,
daß die Direktverbindung (DV) von der Notbetriebs-Steuereinrichtung (NSE) erst dann aufgehoben wird, wenn die Herstellung der Ersatzverbindung (EV) in der Koppeleinrichtung (KE) vollzogen ist,
daß nach dem Aufbau der Ersatzverbindung (EV) an der Schnittstelle (S1), wo das für den Notbetrieb vorgesehene Endgerät (EGn) sich befindet, eine Prüfprozedur ausgelöst wird, in deren Verlauf die Endgeräte (z.B. EG) ihre Adressen übertragen, sofern diese im Notbetriebszustand erhalten geblieben sind, daß dann mit jeder dieser Adressen ein Befehl für den Abbau von Verbindungen über die zugehörige Schnittstelle (U/S) zur Anschlußleitung (AL) übertragen wird,
daß nur für das im Notbetriebszustand aktiv gewesene Endgerät (EGn) ein Verbindungsaufbaubefehl (VAB) über den Signalisierungskanal (D) der Anschlußleitung (AL) von der Steuereinrichtung (ST) der Telekommunikations-Einrichtung (TKE) empfangen wird,
und daß daraufhin die Schnittstelle (S1) des notbetriebsberechtigten Endgeräts (EGn) von dieser Steuereinrichtung (ST) veranlaßt wird, den Signalisierungskanal (D) zum Endgerät (EGn) in einen Zustand zu bringen, wie er beim Bestehen einer Verbindung im Normalbetrieb herrscht.

2. Verfahren nach Anspruch 1,
dadurch gekennzeichnet,
daß nach dem Aufheben der Direktverbindung (DV) von der Notbetriebs-Steuereinrichtung (NSE) durch Kontrolle der Nutzdatenkanäle (B) festgestellt wird, ob digitale Informationen gesendet oder empfangen werden, wobei die jeweils benutzten Nutzdatenkanäle (B) ermittelt werden,
und daß die gerade nicht belegten Kanäle (B, D) für anderweitige Benutzung freigegeben werden.

3. Verfahren nach Anspruch 1,
dadurch gekennzeichnet,
daß die Direktverbindung (DV) von der Notbetriebs-Steuereinrichtung (NSE) erst nach Ablauf einer Verzögerungszeit aufgetrennt wird, während der die Steuereinrichtungen z.B.(ST) und Taktgeber der Telekommunikations-Einrichtung (TKE) ihren Betrieb wieder aufgenommen haben.

4. Verfahren nach Anspruch 1,
dadurch gekennzeichnet,
daß die Notbetriebs-Steuereinrichtung (NSE) teilweise oder vollständig in die Steuereinrichtung (ST) der Telekommunikations-Einrichtung (TKE) integriert ist.
